# EUROPÄISCHE PATENTSCHRIFT

(11) **EP 3 878 775 B1**
(45) Veröffentlichungstag und Bekanntmachung des Hinweises auf die Patenterteilung: **20.12.2023**
(21) Anmeldenummer: 21161491.2
(22) Anmeldetag: 09.03.2021
(51) Int. Cl.: B65G 1/08, B65G 47/88, B65G 13/075

(54) **ROLLENBAHN MIT BREMSVORRICHTUNG**
ROLLER WITH BRAKING DEVICE
BANDE À ROULEAUX POURVU DE DISPOSITIF DE FREINAGE

(30) Priorität: 10.03.2020 DE 102020106410
(43) Veröffentlichungstag der Anmeldung: 15.09.2021
(73) Patentinhaber: BITO-Lagertechnik Bittmann GmbH, 55590 Meisenheim (DE)
(72) Erfinder: HERDER, Frank, 55606 Bärweiler (DE)
(74) Vertreter: Richardt Patentanwälte PartG mbB

(56) Entgegenhaltungen:
- EP-A1- 2 543 614
- EP-B1- 2 543 614
- DE-B- 1 211 991
- FR-A1- 2 564 809
- JP-U- S50 131 796
- SU-A1- 1 419 953

## Beschreibung

Die Erfindung betrifft eine Rollenbahn mit einer Bremsvorrichtung.

Bei mit Schwerkraft betriebenen Rollenbahnen für Ladungsträger wie zum Beispiel Paletten oder Behälter steht an dem ersten Ladungsträger, der sich auf der Entnahmeseite befindet, der größte Druck an. Um das Problem des Staudrucks zu beheben, ist aus der DE 10 2011 078 600 B3 ein Durchlaufregal mit Separiervorrichtung zur Separierung von einer Aufgabeseite zu einer Entnahmeseite hin bewegten Ladungsträgern bekannt.

Die DE 1211991 B offenbart eine Rollenbahn nach dem Oberbegriff des Anspruchs 1. Insbesondere, offenbart das Dokument einen Bremseinrichtung für einen Rollgang, bei der im Falle, dass ein Stückgut auf eine Bremsplatte auffährt, dort ein hebelartiges Abfühlglied herunterdrückt wird, dessen andere Seite über eine Stange mit einer Nase einer exzentrisch gelagerten Bremsrolle gekoppelt ist, die dann über die Förderebene hinaus angehoben wird.

Die SU 1419953 zeigt eine Rollenbahn, deren eines Ende wechselnd angehoben und gesenkt wird.

Der Erfindung liegt die Aufgabe zugrunde, eine verbesserte Rollenbahn bereitzustellen. Die der Erfindung zugrunde liegende Aufgabe wird durch die Merkmale des unabhängigen Patentanspruchs gelöst. Bevorzugte Ausführungsformen der Erfindung sind in den abhängigen Ansprüchen angegeben.

Offenbart ist eine Rollenbahn mit Förderrollen zur Beförderung von Stückgütern in einer Förderrichtung von einer Aufgabeseite zu einer Entnahmeseite, wobei durch die Förderrollen eine Förderebene gebildet wird, wobei die Rollenbahn eine Bremsvorrichtung aufweist, wobei die Bremsvorrichtung umfasst:
- ein erstes Steuerelement, das durch eines der sich in der Förderrichtung stromabwärts entlang eines Förderwegs auf die Entnahmeseite zubewegenden Stückgüter aus einer ersten Stellung, in welches es sich über die Förderebene hinaus erstreckt, in eine zweite Stellung bewegbar ist, in der es sich in oder unterhalb der Förderebene befindet,
- eine zwischen einer ersten und einer zweiten Stellung bewegbare erste Bremsrolle, wobei sich die erste Bremsrolle in der ersten Stellung unterhalb der Förderebene befindet und insbesondere sich in der zweiten Stellung zumindest teilweise auf Höhe einer Kontaktfläche des Stückguts befindet, wobei die erste Bremsrolle bezüglich des ersten Steuerelements entgegen der Förderrichtung stromaufwärts angeordnet ist, wobei die erste Bremsrolle dazu ausgebildet ist in der zweiten Stellung so mit dem darüber gleitenden Stückgut (an der Kontaktfläche) in Kontakt zu treten, dass die erste Bremsrolle das Stückgut von unten abbremst,
- einen das erste Steuerelement mit der ersten Bremsrolle koppelnden Hebel, wobei der Hebel um einen Drehpunkt schwenkbar ist und zwei Hebelenden aufweist, wobei das eine Hebelende durch das erste Steuerelement und das andere Hebelende durch die erste Bremsrolle gebildet wird, und wobei sich aufgrund des Hebels die erste Bremsrolle in der ersten Stellung befindet, wenn sich das Steuerelement in der ersten Stellung befindet und sich die erste Bremsrolle in der zweiten Stellung befindet, wenn sich das erste Steuerelement in der zweiten Stellung befindet.

Ausführungsformen könnten den Vorteil haben, dass aufgrund der Bremsvorrichtung die Geschwindigkeit, mit welcher sich Stückgut auf die Entnahmeseite zubewegt, in einfacher und zuverlässiger Weise reguliert werden kann. Das Abbremsen des Stückguts findet dabei jedoch nur dann statt, wenn dies auch nötig ist. Dies ist insbesondere dann der Fall, wenn sich an der Entnahmeseite bereits Stückgut befindet und ein zu schnelles Auffahren von nachfolgendem Stückgut dazu führen könnte, dass eine Beschädigung des an der Entnahmeseite befindlichen Stückguts stattfinden könnte. Das an der Entnahmeseite befindliche Stückgut könnte jenes sein, welches das erste Steuerelement aufgrund seiner Bewegung stromabwärts von der ersten Stellung in die zweite Stellung bewegt hat.

Dadurch, dass die gesamte erste Bremsrolle von der ersten Stellung in die zweite Stellung bewegt wird, in welcher die erste Bremsrolle mit dem darübergleitenden Stückgut in Kontakt treten kann, könnte sichergestellt sein, dass eine etwaige Beeinträchtigung der sich in Förderrichtung bewegenden Stückgüter tatsächlich nur dann stattfindet, wenn dies auch tatsächlich gewollt ist. Eine permanent in der zweiten Stellung befindliche Förderrolle, die anderweitig dynamisch gebremst werden würde, könnte dies nicht gewährleisten, da zum einen eine solche Rolle von Haus aus einen gewissen Widerstand für darübergleitende Stückgüter aufweist und zum zweiten sich im Laufe der Zeit aufgrund immer wieder stattfindender Bremsvorgänge entsprechende Ablagerungen auf der Rolle bzw. in der Rolle bzw. deren Aufhängung festsetzen können, sodass auch hierdurch die Beweglichkeit der Rolle beeinträchtigt werden könnte. Ablagerungen könnten beispielsweise aus einem Abrieb von entsprechenden Bremsbelägen resultieren, welche zur dynamischen Abbremsung der Rolle verwendet werden.

Es sei angemerkt, dass allgemein im Rahmen der vorliegenden Beschreibung unter einem Stückgut ein beliebiges Gut verstanden wird, welches über Förderrollen von einer Aufgabeseite zu einer Entnahmeseite transportiert werden kann. Hierunter fallen beliebige Arten von Paletten, Kartons, Behälter.

Unter einer Bremsrolle wird eine Rolle verstanden, welche die Geschwindigkeit auf einer Schwerkraftrollenbahn dergestalt regelt, indem sie das Fördergut auf konstanter Ablaufgeschwindigkeit hält oder dieses zumindest bei Überlauf in seiner Geschwindigkeit verlangsamt. Dies geschieht z.B. durch ein in die Rolle integriertes Planetengetriebe, welches bei jeder Drehung Fliehkraftbremsbacken an den Rollenkörper anpresst, und zwar mit proportionaler Bremskraft zum aufgebrachten Bremsmoment. Eine andere Variante einer Bremsrolle ist z.B. aus der EP2523876A1 bekannt.

Unter einer Kontaktfläche des Stückguts wird jene Unterseite des Stückguts verstanden, welche mit den Förderrollen bzw. der Bremsrolle in Kontakt steht. Bei einer Palette kann es sich hierbei z.B. um die den Rollen zugewandte Fläche der Palettenkufen handeln. Es sei angemerkt, dass sich die Position der Kontaktfläche relativ zur Förderebene dynamisch ändern kann, wenn z.B. das Stückgut eine gewisse Deformation erfährt, z.B. an einer Stelle zwischen zwei Rollen "durchhängt".

Dass der Hebel um einen Drehpunkt schwenkbar ist und zwei Hebelenden auf weist, wobei das eine Hebelende durch das erste Steuerelement und das andere Hebelende durch die erste Bremsrolle selbst gebildet wird, ermöglicht eine sehr einfache mechanische Realisierung der Bremsvorrichtung, da hierzu insbesondere auf aufwendige mechanische Kopplungsmechanismen verzichtet werden kann.

Nach einer Ausführungsform umfasst die Rollenbahn ferner einen die Bewegung der Stückgüter blockierenden Endanschlag an der Entnahmeseite, wobei die Stückgüter in der Förderrichtung eine Ausdehnung mit einer Mindestlänge aufweisen. Diese Mindestlänge kann bezüglich einer Rollenbahn festgelegt sein und zum Beispiel die Länge oder Breite einer halben Europoolpalette mit entsprechend 600 mm oder 400 mm aufweisen.

Nach einer Ausführungsform ist der Abstand zwischen dem Endanschlag und dem ersten Steuerelement kleiner oder gleich der Mindestlänge und/oder ist der Abstand zwischen dem Endanschlag und der ersten Bremsrolle kleiner oder gleich der doppelten Mindestlänge und größer als die Mindestlänge, z.B. größer als die 1,2-fache Mindestlänge. Die Auswahl dieser Parameter könnte den Vorteil haben, dass sichergestellt wird, dass diese die Mindestlänge aufweisende Stückgüter in zuverlässiger Weise so rechtzeitig durch die Bremsvorrichtung abgebremst werden, damit sichergestellt ist, dass diese nicht mit zu hoher Wucht auf ein am Endanschlag bereits befindliches Stückgut auflaufen.

Nach einer Ausführungsform umfasst die Rollenbahn ferner eine Nachlaufsperre mit einem zweiten Steuerelement und einem mit dem zweiten Steuerelement gekoppelten Blockierelement, wobei aufgrund der Kopplung bei Betätigung des zweiten Steuerelements durch eines der sich in der Förderrichtung bewegenden Stückgüter das Blockierelement in den Förderweg gedrängt wird, wobei
- das Blockierelement bezüglich der ersten Bremsrolle stromaufwärts angeordnet ist,
- die erste Bremsrolle in der Förderrichtung zwischen dem Blockierelement und einer Freigabeposition angeordnet ist, an welcher die Betätigung des zweiten Steuerelements durch das sich in der Förderrichtung bewegenden Stückgut aufgehoben wird.

Nachlaufsperren als solche sind aus dem Stand der Technik bekannt. Ein Beispiel hierfür ist die obig erwähnte DE 10 2011 078 600 B3, welche eine Nachlaufsperre exemplarisch offenbart. Durch die beschriebene relative Anordnung von Blockierelement und erster Bremsrolle könnte es möglich sein, die Rollenbahn im Mischbetrieb zu betreiben. Unter einem Mischbetrieb wird dabei z.B. verstanden, dass auf der Rollenbahn Stückgüter mit unterschiedlichen Abmessungen, jedoch immer gleich oder größer als die Mindestlänge, befördert werden können. Z.B. wird unter einem Mischbetrieb verstanden, dass auf der Rollenbahn Stückgüter mit genau zwei unterschiedlichen Abmessungen, nämlich einmal mit der Mindestlänge und außerdem mit einer Abmessung größer als die Mindestlänge, befördert werden können.

Insbesondere wird hierunter verstanden, dass Stückgüter mit einerseits der Mindestlänge und andererseits mit der doppelten Mindestlänge gleichzeitig durch die Rollenbahn transportiert werden können. Im Fall der obig erwähnte Europoolpaletten würde es sich damit um sogenannte Halbpaletten und Vollpaletten handeln.

Das Blockierelement kommt insbesondere dann zum Einsatz, wenn zwei einander hinterherlaufende Stückgüter der doppelten Mindestlänge sich in Richtung Endanschlag bewegen. Befindet sich nun das vordere Stückgut am Endanschlag, kann bezüglich des nachfolgenden Stückguts die Bremsvorrichtung keine Wirkung entfalten, da diese bereits durch das am Endanschlag befindliche Stückgut "besetzt" ist. In diesem Fall käme die Nachlaufsperre zur Wirkung, welche nun mit ihrem Blockierelement das nachfolgende Stückgut an einer Weiterbewegung auf das am Endanschlag befindliche Stückgut verhindert.

Handelt es sich hingegen bei dem Stückgut um Stückgut mit einer Ausdehnung der Mindestlänge, also beispielsweise um Halbpaletten, und befände sich eines der Stückgüter bereits am Endanschlag, so würde z.B. in diesem Fall die Nachlaufsperre ihre Wirkung bezüglich des nun nachfolgenden Stückguts nicht entfalten können, da die Nachlaufsperre nur dann "greift", das heißt das zweite Steuerelement nur dann durch ein am Endanschlag befindliches Stückgut betätigt bleibt, wenn dieses eine entsprechend "große" Abmessung, insbesondere die Abmessung einer Vollpalette bzw. allgemein mindestens mehr als die Mindestlänge, vorzugsweise das mindestens 1,2-fache der Mindestlänge aufweist.

Um dennoch ein wuchtiges Auflaufen des nachfolgenden Stückgutes auf das am Endanschlag befindliche Stückgut zu verhindern, wird die Bremsvorrichtung nun ihre Wirkung entfalten, indem die erste Bremsrolle, die sich nun in der zweiten Stellung befindet, den Bewegungsvorgang des nachfolgenden Stückguts abbremst.

Nach einer Ausführungsform ist das zweite Steuerelement dazu ausgebildet, sich automatisch nach einem Außer-Kontakttreten des sich in der Förderrichtung auf die Entnahmeseite zubewegenden Stückguts in die erste Stellung zu bewegen und dadurch das Blockierelement in die erste Stellung zu drängen, wobei an der Freigabeposition ein Außer-Kontakttreten des sich in der Förderrichtung bewegenden Stückguts erfolgt.

An dieser Stelle sei angemerkt, dass im Rahmen der gesamten Beschreibung der Begriff des "Drängens" eines Elements z.B. so verstanden wird, dass zumindest eine Kraft auf das entsprechende Element in jene Richtung ausgeübt wird, in welche das Drängen stattfindet. Besteht in der Richtung der Kraft z.B. kein Hindernis in Form eines z.B. dort befindlichen Stückguts, wird das Drängen eine Bewegung des Elements in die Kraftrichtung bewirken. Befindet sich dort hingegen ein z.B. Stückgut, so wird das Element lediglich gegen das Stückgut drücken, dieses jedoch nicht bewegen (z.B. zur Seite drücken oder anheben oder ähnliches).

Im beschriebenen Beispiel des Blockierelements bedeutet dies, eine Kraft dergestalt auf das Blockierelement ausgeübt wird, dass dieses in Richtung die zweite Stellung gedrückt wird. Befindet sich allerdings zu diesem Zeitpunkt zum Beispiel ein Stückgut oberhalb des Blockierelements, so wird dieses Stückgut verhindern, dass das Blockierelement tatsächlich die zweite Stellung einnehmen kann. Das "Drängen" beschreibt also in diesem Fall insbesondere den Versuch, dass das Blockierelement die zweite Stellung einnimmt.

Nach einer weiteren Ausführungsform der Erfindung ist der Abstand zwischen dem Endanschlag und der Freigabeposition so gewählt, dass das zweite Steuerelement durch ein sich am Endanschlag befindliches Stückgut in der zweiten Stellung gehalten wird, wenn eine Ausdehnung dieses Stückguts in der Förderrichtung mindestens mehr als die Mindestlänge, vorzugsweise das mind. 1,2-fache der Mindestlänge beträgt. Wie bereits oben erwähnt, könnte dies gewährleisten, dass die Nachlaufsperre nur vor Stückgüter einer solchen Ausdehnung in der Förderrichtung Wirksamkeit zeigt, welche größer als die Mindestlänge sind. Ein Beispiel ist der obig erwähnte Mischbetrieb der Rollenbahn, insbesondere für Europoolpaletten mit der halben bzw. der vollen Palettengröße. Dies kann jedoch für beliebige entsprechende Transportpaletten, Kartonagen und sonstiger Waren in analoger Weise Anwendung finden.

Nach einer weiteren Ausführungsform handelt es sich bei dem zweiten Steuerelement zum Beispiel um eine Steuerfahne, welche aufgrund der Betätigung um eine senkrecht zur Förderebene stehende Achse zwischen der ersten Stellung und der zweiten Stellung schwenkbar ist, insbesondere rotierbar ist und in der ersten Stellung seitlich in den Förderweg der Stückgüter hineinragt. Möglich ist jedoch auch, dass es sich bei dem zweiten Steuerelement um einen Steuerhebel handelt, wobei sich der Steuerhebel in der ersten Stellung über die Förderebene hinaus erstreckt und sich in der zweiten Stellung in oder unterhalb der Förderebene befindet. Beispielsweise könnte der Steuerhebel von unten zwischen einander benachbarten Förderrollen hindurch in den Förderweg der Stückgüter hineinragen, um daraufhin bei Verfahren durch eines der Stückgüter in die zweite Stellung gebogen, gekippt oder nach unten gedrückt werden.

Nach einer Ausführungsform erstreckt sich die Schwenkachse des Hebels parallel zur Förderebene und senkrecht zur Förderrichtung.

Nach einer Ausführungsform ist das erste Steuerelement ausgebildet, in einem durch das Stückgut unbelasteten Zustand automatisch in die erste Stellung bewegt zu werden.

Dass das erste Steuerelement automatisch in die erste Stellung bewegt wird, könnte den Vorteil haben, dass in jedem Fall sichergestellt ist, dass die erste Bremsrolle nicht unbeabsichtigt ihre Bremswirkung entfalten kann, obwohl dies aktuell überhaupt nicht notwendig ist. Es könnte also sichergestellt werden, dass die erste Bremsrolle nur dann zum Einsatz kommt, wenn dies auch tatsächlich nötig ist.

Zum Beispiel ist der Abstand der Hebelenden vom Drehpunkt so gewählt, dass das Bewegen des ersten Steuerelements in die erste Stellung schwerkraftbedingt erfolgt. Es ist also zum Beispiel der Drehpunkt so gewählt, dass im unbelasteten Zustand des ersten Steuerelements die erste Bremsrolle automatisch nach unten kippt und dadurch, wie zum Beispiel bei einer Wippe, das Hebelende mit dem ersten Steuerelement nach oben in die erste Stellung bewegt wird.

Alternativ oder zusätzlich ist es möglich, dass ferner ein elastisches Element vorgesehen ist und dass das Bewegen des ersten Steuerelements in die erste Stellung bedingt durch das elastische Element erfolgt. Bei dem elastischen Element könnte es sich beispielsweise um eine Feder oder um ein Gummielement handeln, welche das Hebelende oder allgemein ein Teil des Hebels oder gar das erste Steuerelement selbst in Richtung des Förderwegs und damit das erste Steuerelement in die erste Stellung zieht oder drückt. Ist das besagte elastische Element zwischen dem Drehpunkt und jenem Hebelende angeordnet, an welchem die erste Bremsrolle befestigt ist, so kann z.B. davon gesprochen werden, dass das elastische Element beispielsweise diesen Teil des Hebels von der Förderebene wegdrückt, das heißt, diesen Teil des Hebels nach unten drückt und dadurch das erste Steuerelement in die erste Stellung bewegt.

Nach einer Ausführungsform wird durch die Rollenbahn eine Schwerkraftrollenbahn gebildet.

Erfindungsgemäß kommt eine Bremswirkung der Bremsrolle dadurch zustande, dass die Bremsrolle in der zweiten Stellung so mit dem darüber gleitenden Stückgut (z.B. dessen Kontaktfläche) in Kontakt tritt, dass die Bremsrolle das Stückgut von unten abbremst.

Nach einer Ausführungsform umfasst die Rollenbahn ferner eine zweite, durch den Hebel, zwischen einer ersten und einer zweiten Stellung bewegbaren Bremsrolle, wobei die zweite Bremsrolle zwischen dem ersten Steuerelement und der ersten Bremsrolle angeordnet ist und der Hebel ferner das erste Steuerelement mit der zweiten Bremsrolle koppelt.

Dies könnte den Vorteil haben, dass über die Stellung des Hebels die Bremswirkung reguliert werden kann. Je nach Hebelstellung kann nur die zweite Bremsrolle oder auch zusätzlich noch die erste Bremsrolle am Stückgut angreifen und dieses abbremsen. Auf diese Art könnte für eine Rollenbahn zwei unterschiedliche Bremswege definiert werden, z.B. in Abhängigkeit vom beförderten Stückgut. Möglich ist z.B., dass ein Umschaltmechanismus an der Rollenbahn, insbesondere am Hebel vorgesehen ist, welcher dafür sorgt, dass je nach einem Schaltzustand des Umschaltmechanismus das das erste Steuerelement bewegende Stückgut entweder nur durch die zweite Bremsrolle, oder durch die erste und die zweite Bremsrolle abgebremst wird. Hierzu könnte die zweite Bremsrolle relativ zum Hebel über den Umschaltmechanismus höhenverstellbar sein.

Allgemein kann die zweite Bremsrolle dazu ausgebildet ist in der zweiten Stellung so mit dem darüber gleitenden Stückgut in Kontakt zu treten, dass die zweite Bremsrolle das Stückgut von unten abbremst, und in der ersten Stellung außer Kontakt mit dem Stückgut zu stehen, also sich in der ersten Stellung insbesondere unterhalb der Kontaktfläche des Stückguts zu befinden.

Nach einer Ausführungsform ist das Steuerelement in Abhängigkeit und aufgrund von der durch das Stückgut auf das Steuerelement wirkenden Gewichtskraft (also der Hebelkraft) in die zweite Stellung oder einer zwischen der ersten Stellung und der zweiten Stellung befindlichen dritten Stellung bewegbar, wobei der Hebel ausgebildet ist, dass in der dritten Stellung des Steuerelements die erste Bremsrolle (noch) außer Kontakt mit dem Stückgut steht (oder gerät) und sich die zweite Bremsrolle in der zweiten Stellung befindet. Der Hebel ist insbesondere ausgebildet, dass in der zweiten Stellung des Steuerelements sich die erste und die zweite Bremsrolle in deren jeweiligen zweiten Stellung befinden.

So kann sich insbesondere in der dritten Stellung des Steuerelements aufgrund des Hebels die erste Bremsrolle unterhalb der Kontaktfläche befinden. Ferner ist der Hebel ausgebildet, dass in der zweiten Stellung des Steuerelements aufgrund des Hebels sich die zweite Bremsrolle zumindest teilweise auf Höhe der Kontaktfläche befindet und damit in bremsenden Kontakt mit dem Stückgut geraten kann.

Dies könnte den Vorteil haben, dass die Rollenbahn zum Transport unterschiedlich schwerer Stückgüter verwendet werden kann, jedoch gewährleistet ist, dass auch bei Stückgütern höherer Masse eine zuverlässige Abbremsung möglich ist. Würden bei nur einer Rolle leichte Stückgüter so abgebremst, dass sie an der Entnahmeseite, z.B. am Endanschlag, mit einer Geschwindigkeit v1 "ankommen", so wäre bei schwereren Stückgütern aufgrund der höheren Masse deren Geschwindigkeit v2 unter Umständen deutlich größer als v1. Solche schwereren Stückgüter würden durch einen etwaigen Endanschlag abrupt mit hoher Aufprallenergie zum Stillstand kommen. Kommt nun die zweite Rolle zusätzlich zum Einsatz, könnte die Auslegung von Bremsrollen, Steuerrolle und Hebel so sein, dass leichte Stückgüter nur durch die erste Bremsrolle auf z.B. Geschwindigkeit v1 abgebremst werden und dass schwere Stückgüter durch die erste und die zweite Bremsrolle ebenfalls auf z.B. Geschwindigkeit v1 abgebremst werden.

Nach einer Ausführungsform handelt es sich bei dem ersten Steuerelement um eine Förderrolle oder eine Bremsrolle.

Es sei angemerkt, dass die obig beschriebenen Ausführungsformen in beliebiger Weise miteinander kombiniert werden können, sofern sich solche Kombinationen nicht gegenseitig ausschließen.

Im Folgenden werden Ausführungsformen anhand der nachfolgenden Zeichnungen näher erläutert. Es zeigen:
- Figur 1: eine perspektivische Ansicht einer Rollenbahn,
- Figur 2: eine Querschnittsansicht einer Rollenbahn mit Bremsvorrichtung und Vollpalette,
- Figur 3: eine Querschnittsansicht einer Rollenbahn mit Bremsvorrichtung und zwei darauf transportierten Halbpaletten,
- Figur 4: eine Querschnittsansicht einer Rollenbahn mit Bremsvorrichtung und zwei darauf transportierten Halbpaletten,
- Figur 5: eine Querschnittsansicht einer Rollenbahn mit Bremsvorrichtung und Nachlaufsperre und transportierter Vollpalette,
- Figur 6: eine Querschnittsansicht einer Rollenbahn mit Nachlaufsperre und Bremsvorrichtung und hierauf transportierter Vollpalette,
- Figur 7: eine Querschnittsansicht einer Rollenbahn mit Bremsvorrichtung und Nachlaufsperre und auf der Rollenbahn transportierten Halbpaletten,
- Figur 8: eine Querschnittsansicht einer Rollenbahn mit Bremsvorrichtung und Nachlaufsperre und hierauf transportierten Halbpaletten,
- Figur 9: eine perspektivische Ansicht einer Rollenbahn mit Nachlaufsperre,
- Figur 10: eine Querschnittsansicht einer Rollenbahn mit einer Mehrzahl der Bremsrollen und einem Steuerelement,
- Figur 11: eine Querschnittsansicht einer Rollenbahn mit einer Mehrzahl der Bremsrollen und einem Steuerelement, wobei ein leichtes Stückgut befördert wird,
- Figur 12: eine Querschnittsansicht einer Rollenbahn mit einer Mehrzahl der Bremsrollen und einem Steuerelement, wobei ein mittelschweres Stückgut befördert wird,
- Figur 13: eine Querschnittsansicht einer Rollenbahn mit einer Mehrzahl der Bremsrollen und einem Steuerelement, wobei ein schweres Stückgut befördert wird.

Im Folgenden werden einander ähnliche Elemente mit denselben Bezugszeichen gekennzeichnet.

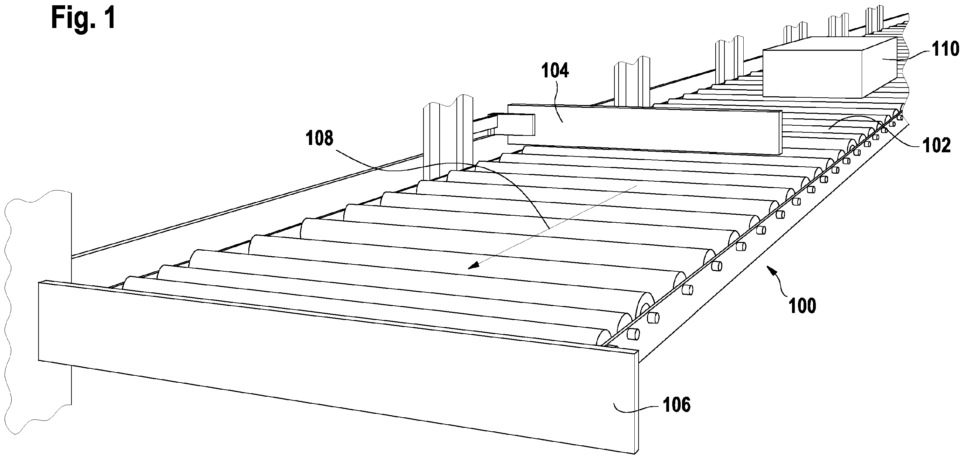

Die Figur 1 zeigt eine perspektivische Ansicht einer Rollenbahn 100 eines z.B. Durchlaufregals. Bei der Rollenbahn 100 handelt es sich ohne Beschränkung der Allgemeinheit um eine Schwerkraftrollenbahn, wobei eine Vielzahl hintereinander an einem Rahmen angeordnete Förderrollen 102 Stückgut 110 in einer Förderrichtung 108 stromabwärts in Richtung einer Entnahmeseite transportieren können. Möglich ist jedoch auch, dass einige der Rollen motorisch angetrieben sind, um die Beförderung in Richtung 108 zu gewährleisten. Die Entnahmeseite weist z.B. einen Endanschlag 106 auf, der das Stückgut 110 daran hindert, von der Rollenbahn zu fallen. Im Folgenden sei ohne Beschränkung der Allgemeinheit davon ausgegangen, dass es sich bei dem Stückgut 110 um Paletten handelt.

Ferner wird in Figur 1 exemplarisch eine Nachlaufsperre 104 gezeigt, auf welche jedoch in den nachfolgenden Figuren näher eingegangen werden soll.

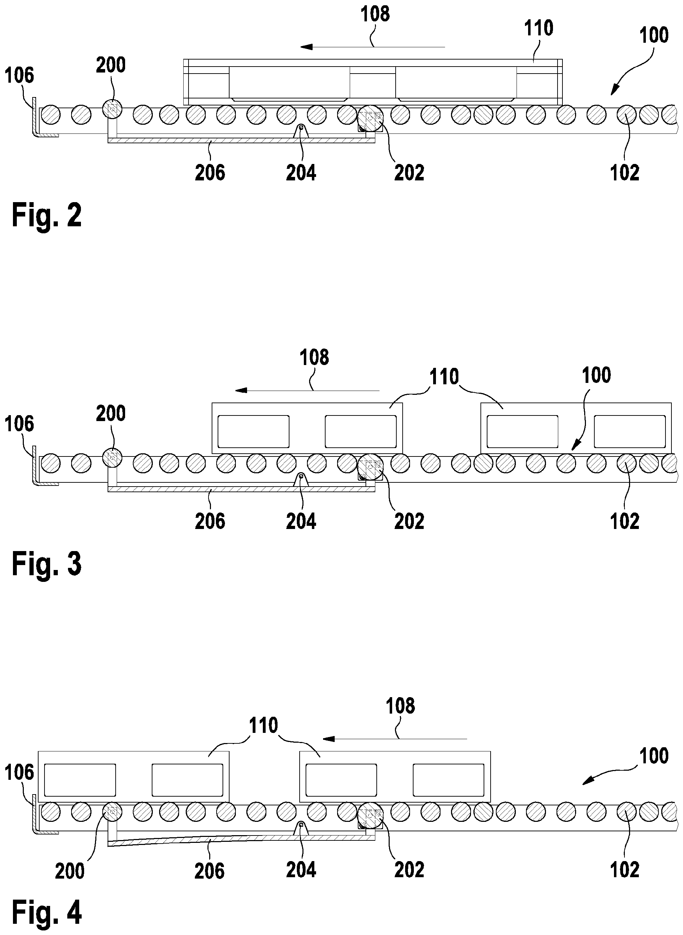

Figur 2 zeigt eine Querschnittsansicht durch eine Rollenbahn, wobei hier die Vielzahl hintereinander angeordneter Förderrollen 102 ersichtlich ist. Auf den Förderrollen wird augenblicklich eine Palette 110 in Richtung 108, das heißt in der Förderrichtung von einer Aufnahmeseite zur Entnahmeseite, befördert. Durch die Förderrollen 102 wird hierfür eine entsprechende Förderebene gebildet.

Der in Figur 2 gezeigte Endanschlag 106 ist optional.

Die Rollenbahn 100 weist eine Bremsvorrichtung auf, wobei die Bremsvorrichtung ein erstes Steuerelement 200 und eine Bremsrolle 202 umfasst. Das erste Steuerelement 200 ist durch das Stückgut 110 vom in Figur 2 gezeigten Zustand "erste Stellung" in eine zweite Stellung zum Beispiel nach unten drückbar. Dies geschieht, wenn die Palette 110 in Richtung 108 bewegt wird, daraufhin auf das Steuerelement 200 aufläuft und dieses hierdurch in die zweite Stellung gedrückt wird, insbesondere nach unten drückt.

Bei dem ersten Steuerelement kann es sich allgemein und losgelöst vom vorliegenden Beispiel um eine Förderrolle handeln, z.B. vom Typ einer der Förderrollen 102. Dies könnte den Vorteil haben, dass auch im durch die Palette belasteten Zustand die Palette leicht über das erste Steuerelement hinwegrollen kann. Möglich ist aber auch, dass es sich bei dem ersten Steuerelement um einen Stift oder ein sich z.B. parallel zur Förderebene und z.B. senkrecht zur Förderrichtung erstreckendes Profil handelt. Weist der Stift bzw. das Profil zusätzlich noch eine Schräge auf, auf welche die Palette bei Bewegung in Richtung 108 auflaufen kann, so könnte dies die Überführung des ersten Steuerelements von der ersten Stellung, wie sie in Figur 2 gezeigt ist, in welcher sich das erste Steuerelement über die Förderebene hinaus erstreckt, in die zweite Stellung, in der sich das Steuerelement in oder unterhalb der Förderebene befindet, vereinfachen.

Die Bremsrolle 202 ist ebenfalls zwischen einer ersten und einer zweiten Stellung bewegbar, wobei in der Figur 2 die Bremsrolle 202 in der ersten Stellung gezeigt ist. In der ersten Stellung befindet sich die Bremsrolle unterhalb der Förderebene und in der zweiten Stellung befindet sich die Bremsrolle z.B. zumindest teilweise in der Förderebene oder leicht oberhalb davon. In der zweiten Stellung sollte die Bremsrolle so mit dem darübergleitenden Stückgut in Kontakt treten, dass die Bremsrolle das Stückgut abbremsen kann. In der zweiten Stellung kann also die Bremsrolle bezüglich dem etwaig darüber befindlichen Stückgut seine Bremsfunktion auf das Stückgut bzw. dessen Bewegung in der Förderrichtung ausüben.

Die Bremsrolle 202 ist bezüglich des Steuerelements 200 entgegen der Förderrichtung 108 stromaufwärts angeordnet. Das Steuerelement 200 und die Bremsrolle 202 sind über einen Hebel 206 miteinander gekoppelt. Der Hebel 206 ist in einem Drehpunkt 204 gelagert, wobei der Drehpunkt exemplarisch an der Rollenbahn angeordnet sein kann. Der Hebel bewirkt, dass sich die Bremsrolle zwangsgeführt dann in der ersten Stellung befindet, wenn sich das Steuerelement in der zweiten Stellung befindet und sich die Bremsrolle in der zweiten Stellung befindet, wenn sich das erste Steuerelement in der zweiten Stellung befindet.

In der Querschnittsansicht der Figur 3 befinden sich nun anstatt einer einzelnen Vollpalette 110 zwei sogenannte Halbpaletten 110 auf der Förderebene. Beide bewegen sich in Richtung 108. Da im in Figur 3 gezeigten Zustand das Steuerelement 200 unbelastet ist, entfaltet zu diesem Zeitpunkt die Bremsrolle 202 keine Wirkung, da sich in der ersten Stellung unterhalb der Förderebene der Rollenbahn befindet. Dies führt dazu, dass sich die vordere Halbpalette 110 ungehindert in Richtung Endanschlag 106 in Richtung 108 bewegen kann.

In der Figur 4 befindet sich nun die vordere Halbpalette 110 am Endanschlag und hat dabei das Steuerelement 200 überfahren, das heißt von der ersten Stellung in die zweite Stellung bewegt. Aufgrund dieser Bewegung wird der Hebel 206 um den Drehpunkt 204 bewegt, wodurch die Bremsrolle 202 nun nach oben von der ersten Stellung in die zweite Stellung gedrückt wird. Dies führt dazu, dass sich nun die Bremsrolle 202 in der zweiten Stellung in der Förderebene befindet oder zumindest in einer Position, in welcher sie in Kontakt mit dem darübergleitenden Stückgut gerät. Dadurch übt die Bremsrolle 202 eine Bremswirkung auf die nun darübergleitende hintere Halbpalette 110 aus. Dadurch wird diese hintere Halbpalette 110 abgebremst und fährt somit insbesondere nicht mit ungebremster Wucht auf die vordere stehende Halbpalette 110 auf.

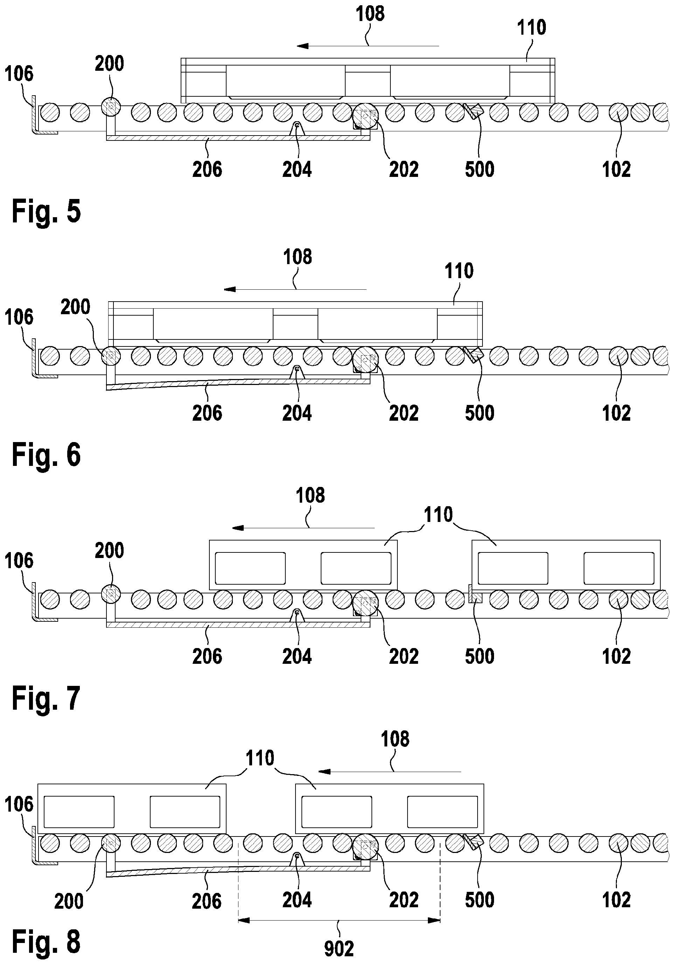

In den nachfolgend beschriebenen Beispielen der Figuren 5 und 8 ist im Vergleich zu den Figuren 2 bis 4 zusätzlich eine Nachlaufsperre vorgesehen. Diese Nachlaufsperre umfasst ein in den Figuren 5 bis 8 nicht näher dargestelltes zweites Steuerelement und ein mit diesem zweiten Steuerelement gekoppeltes Blockierelement 500.

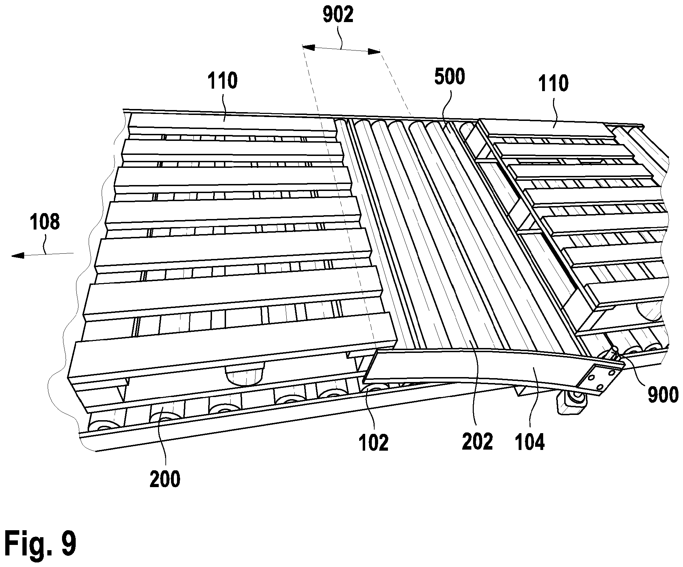

In der perspektivischen Ansicht der Figur 9 ist das zweite Steuerelement in Form einer Steuerfahne 104 exemplarisch angegeben. Diese Steuerfahne 104 kann um eine insbesondere senkrecht zur Förderebene stehende Achse 900 zwischen einer ersten Stellung und einer zweiten Stellung geschwenkt werden. In der ersten Stellung ragt dabei die Steuerfahne seitlich in den Förderweg der Stückgüter hinein und in der zweiten Stellung ist der Förderweg für die Stückgüter im Wesentlichen freigegeben. In der zweiten Stellung gleiten die Stückgüter an der Steuerfahne entlang. Das zweite Steuerelement 104 wird nun dadurch betätigt, dass das Stückgut 110 bei Bewegung in Richtung 108 mit der Steuerfahne in Kontakt tritt, wodurch die Steuerfahne um die Achse 900 geschwenkt wird. Es sei an dieser Stelle angemerkt, dass anstatt einer Steuerfahne auch ein ähnliches Element zum Einsatz kommen kann, wie es bereits bezüglich des (ersten) Steuerelements 200 diskutiert wurde.

Befindet sich das Stückgut 110 im Bereich 902 (zumindest teilweise), so befindet sich das zweite Steuerelement 104 im betätigten Zustand, das heißt in dem Beispiel der Figur 9 ist es um die Achse 900 zur Seite geschwenkt. Sobald jedoch das Stückgut den Bereich 902 verlässt, das heißt außer Kontakt mit Steuerfahne 104 tritt, schwenkt diese wieder zurück in ihre erste Stellung.

Das Blockierelement 500 der Nachlaufsperre ist nun dergestalt mit dem zweiten Steuerelement 104 gekoppelt, dass aufgrund der Kopplung bei Betätigung des zweiten Steuerelements durch eines der sich in der Förderrichtung bewegenden Stückguts 110 das Blockierelement 500 in den Förderweg gedrängt wird. Bei dem Blockierelement kann es sich beispielsweise um einen in den Förderweg hineinragenden Stift oder ein in den Förderweg hineinragendes Profil handeln. Das Blockierelement bewirkt in seiner zweiten Stellung, das heißt in der Stellung, in welche es in den Förderweg hineinragt, dass ein nachfolgendes Stückgut 110 blockiert wird. Das Stückgut kann sich insbesondere nicht mehr in Richtung 108 entlang des Förderwegs weiterbewegen. Befindet sich beispielsweise das vordere Stückgut 110 im in Figur 9 gezeigten Zustand an einer Entnahmeposition, also ist es zum Beispiel auf einen Endanschlag 106 aufgelaufen, so verhindert das Blockierelement 500, dass ein nachfolgendes Stückgut 110 von hinten auf das vordere Stückgut 110 auflaufen kann.

Zurückkommend auf die Figuren 5 bis 8 ist zunächst in Figur 5 der Fall gezeigt, bei welchem eine Palette 110 in Richtung 108 über die Förderebene bewegt wird. Sowohl die Bremsrolle 202 als auch das Blockierelement 500 befinden sich jeweils in einer ersten Stellung, in welcher sie die Bewegung der Palette 110 in Richtung 108 nicht bremsen (Bremsrolle 202) bzw. blockieren (Blockierelement 500). Es sei an dieser Stelle angemerkt, dass im in Figur 5 gezeigten Zustand das zweite Steuerelement 104 (nicht gezeigt) zwar in der zweiten Stellung befindlich ist, jedoch vorzugsweise ein Mechanismus vorgesehen ist, der verhindert, dass das Blockierelement 500 "mit aller Gewalt" von der ersten Stellung in die zweite Stellung überführt wird. Es findet an dieser Stelle lediglich ein Drängen des Blockierelements 500 von der ersten Stellung in die zweite Stellung, das heißt in die Blockierstellung, statt. Praktisch wird sich vorzugsweise das Blockierelement 500 erst dann in die zweite Stellung bewegen, wenn der darüber befindliche Laufweg durch die Palette 110 freigegeben wurde.

In der Figur 6 hat sich nun die Palette 110 so weit in Richtung Endanschlag 106 bewegt, dass nun das erste Steuerelement 200 von der ersten Stellung in die zweite Stellung nach unten gedrückt wird. Dadurch wird der Hebel 206 um den Drehpunkt 204 rotiert und die Bremsrolle 202 von unten gegen die Palette 110 bzw. insbesondere deren Kufen gedrückt. Dies führt dazu, dass nun die Bewegung der Palette 110 in Richtung 108 abgebremst wird. Hierdurch kann insbesondere die Palette 110 sanft auf den Anschlag 106 auflaufen.

Würde sich nun die Palette 110 am Endanschlag befinden, so könnte hieraus der in Figur 9 gezeigte Zustand resultieren, in welchem der hintere Bereich der Palette 110 das zweite Steuerelement 104 noch in der zweiten Stellung hält. Jegliche nachfolgende Palette, egal welcher Größe, wird aufgrund des nun im Fahrweg befindlichen Blockierelements 500 an einer Weiterfahrt in Richtung Endanschlag gehindert werden. Dies wird so lange der Fall sein, bis die vordere Palette 110 von der Entnahmeposition beispielsweise durch ein Start- und Bediengerät entnommen wurde. Dadurch tritt die vordere Palette 110 außer Kontakt mit dem Steuerelement 104, sodass sich nun dieses wieder zurück in die erste Position bewegen kann. Dies resultiert in einer Bewegung des Blockierelements 500 ebenfalls in die erste Position. Das Blockierelement wird also aus dem Förderweg bewegt und eine etwaig nachfolgende Palette kann ungehindert wieder in Richtung 108 weiterrollen.

In Figur 7 bewegen sich nun zwei Halbpaletten 110 in Richtung 108 auf die Entnahmeposition zu. Die vordere Halbpalette 110 hat das zweite Steuerelement 104 in die zweite Stellung bewegt, sodass daraus resultierend das Blockierelement 500 ebenfalls in die zweite Stellung bewegt wurde. Die zweite Stellung des Blockierelements 500 führt nun, wie in der Figur 7 gezeigt, insbesondere dazu, dass die nachfolgende Palette 110 an einer Weiterfahrt in Richtung 108 gehindert wird.

Da die vordere Palette 110 an dieser Position das erste Steuerelement 200 noch nicht überfahren und betätigt hat, befindet sich zu diesem Zeitpunkt die Bremsrolle 202 in der ersten Stellung, in welcher sie nicht in Kontakt mit der Palette 110 geraten ist. Daher kann die vordere Palette 110 ungehindert in Richtung 108 in Richtung Endanschlag 106 rollen.

In der Figur 8 hat die vordere Palette 110 den Endanschlag 106 erreicht und wurde durch diesen gestoppt. Gleichzeitig wurde das zweite Steuerelement 104 freigegeben und ist hierdurch zurück in die erste Position in den Fahrweg der nachfolgenden Palette 110 hineingeschwenkt. Konsequenterweise ist das Blockierelement 500 von der zweiten Position zurück in die erste Position geschwenkt, in welcher der Fahrweg für die nachfolgende Palette 110 freigegeben wurde. Dies führt dazu, dass nun die nachfolgende Palette 110 in Richtung 108 ebenfalls in Richtung Endanschlag 106 rollt.

Allerdings hat nun die vordere Palette 110 das erste Steuerelement 200 von der ersten Stellung in die zweite Stellung bewegt. Hierdurch wurde der Hebel 206 um den Drehpunkt 204 geschwenkt. Dadurch wurde die Bremsrolle 202 von der ersten Stellung in die zweite Stellung bewegt, in welcher sich die Bremsrolle zumindest teilweise in der Förderebene befindet oder zumindest in einer Position, in welcher sie in Kontakt mit dem darübergleitenden Stückgut gerät. Die Bremsrolle kann daher im Eingriff mit einer darüberrollenden Palette 110 treten. Durch diesen Eingriff wird eine Bremswirkung von der Bremsrolle 202 auf die Palette 110 ausgeübt, sodass diese nun in ihrer Bewegung in Richtung 108 verlangsamt wird. Dadurch kann die Wucht reduziert werden, mit welcher die hintere Palette auf die vordere am Endanschlag befindliche Palette aufläuft.

Exemplarisch ist in der Figur 8 außerdem nochmals der Bereich 902 skizziert, der bereits bezüglich der Figur 9 diskutiert wurde. Befindet sich ein Teil einer Palette im Bereich 902, so wird hierdurch z.B. das zweite Steuerelement 104 in der zweiten Stellung gehalten und hierdurch das Blockierelement 500 von der ersten Stellung in die zweite Stellung gedrängt. Sobald sich keine Palette mehr im Bereich 902 befindet, kann das zweite Steuerelement 104 von der zweiten Stellung zurück in die erste Stellung selbstständig, zum Beispiel federkraftbedingt, bewegt werden.

In dem in Figur 8 gezeigten Beispiel kann sich zwar das zweite Steuerelement 104 in der zweiten Stellung, zum Beispiel ähnlich wie in der Figur 9 gezeigt, befinden. Da sich allerdings zu diesem Zeitpunkt die hintere Palette 110 auf dem Blockierelement 500 befindet, wird hierdurch lediglich das Blockierelement 500 von der ersten Stellung in die zweite Stellung gedrängt, jedoch nicht in den Fahrweg hinein bewegt. Letzteres würde im in Figur 8 gezeigten Zustand dazu führen, dass der hintere Teil der Palette 110 von der Förderebene weg nach oben gedrückt werden würde, was jedoch vorzugsweise nicht beabsichtigt ist.

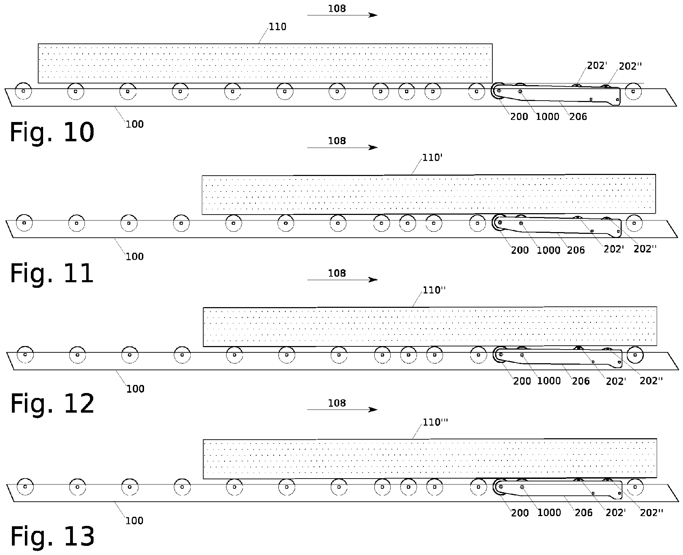

Figur 10 zeigt eine Querschnittsansicht einer Rollenbahn 100, die ein Steuerelement 200 sowie eine Mehrzahl der Bremsrollen 202' und 202" aufweist, wobei die Bremsrollen 202' und 202" bezüglich des ersten Steuerelements 200 entgegen der Förderrichtung 108 hintereinander stromaufwärts angeordnet sind.

Figur 11 zeigt dieselbe Rollenbahn 200 wie in Figur 10, wobei ein relativ leichtes Stückgut 110' über die Rollenbahn 200 entlang der Förderrichtung 108 befördert wird. Das Stückgut 110' wiegt beispielsweise zwischen 0kg und 80kg, und ist daher nicht schwer genug um das Steuerelement 200 aus seiner dort gezeigten ersten Stellung nach unten zu drücken, wodurch sich das Steuerelement 200 in der Ausgangsstellung oberhalb der Förderebene der Rollenbahn befindet. Dadurch haben die Bremsrollen 202' und 202" noch "Luft" und kommen nicht mit dem Stückgut in Kontakt, so dass die Bremsrollen keine Bremswirkung entfalten.

Es sei angemerkt, dass es auch möglich ist, dass das Stückgut 110' zwar auf das Steuerelement 200, z.B. allgemein eine Förderrolle oder eine Bremsrolle oder ein in die Förderebene hineinragender Stift oder Hebel 206, eine Kraft nach unten ausübt und damit unter Umständen den Hebel 206 leicht bewegt, diese Hebelbewegung jedoch nicht ausreicht, damit die Bremsrollen 202' oder 202" durch Kontakt mit dem Stückgut 110' ihre Bremswirkung entfalten. Das Steuerelement behält also in diesem Sinn seine erste Stellung bei.

Bremswirkung meint allgemein, dass eine Bremsrolle 202 mit dem darüber gleitenden Stückgut 110 (von unten) an dessen Kontaktfläche in Kontakt tritt, also die Kontaktfläche des Stückguts von unten berührt und dabei die Bremsrolle 202 das Stückgut 110 von unten abbremst.

Figur 12 zeigt dieselbe Rollenbahn 200 wie in Figur 10, wobei ein mittelschweres Stückgut 110" über die Rollenbahn 200 entlang der Förderrichtung 108 befördert wird. Das Stückgut 110" wiegt beispielsweise zwischen 80kg und 130kg. Das Stückgut 110" ist daher schwer genug um das Steuerelement 200 nach unten von der ersten Stellung in eine darunter befindliche dritte Stellung zu drücken, aber das Steuerelement 200 verbleibt in diesem Beispiel noch über der Förderebene. Durch dieses Drücken wird der Hebel 206 um die Achse 1000 verschwenkt, wodurch der Abstand zwischen der Oberseite der Bremsrolle 202' und der die Unterseite des Stückguts bildende Kontaktfläche auf null reduziert wird, jedoch der Abstand zwischen der Oberseite der Bremsrolle 202" und der Kontaktfläche des Stückguts 110" (Lauffläche) größer als null ist.

Durch die elastischen Eigenschaften des Stückgutes 110" hängt das Stückgut im Bereich der Bremsrollen 202' und 202" leicht durch, sodass eine nach unten gebogene Kontaktfläche des Stückguts resultiert. Dies führt dazu, dass die Bremsrolle 202' gegen diese Kontaktfläche des Stückguts 110" drücken kann und seine Bremswirkung entfalten kann. Das Zusammenspiel des Durchhangs des Stückgutes 110" und der Hebelwirkung des Steuerelements 200 reicht jedoch nicht aus, um das Stückgut 110" mit der Bremsrolle 202" in Kontakt zu bringen, sodass die Bremsrolle 202" ihre Bremswirkung noch nicht entfaltet.

Die Kontaktfläche weist also im Bereich der Bremsrollen 202' und 202" aufgrund des durchhängenden Stückguts 110" eine leichte Wölbung nach unten auf.

Figur 13 zeigt dieselbe Rollenbahn 200 wie in Figur 10, wobei ein relativ schweres Stückgut 110‴ über die Rollenbahn 200 entlang der Förderrichtung 108 befördert wird. Das Stückgut 110‴ wiegt beispielsweise über 130kg. Das Stückgut 110‴ ist daher schwer genug, um dergestalt auf das Steuerelement 200 zu drücken, dass sich dadurch die Oberseite des Steuerelements 200 insbesondere in der Förderebene befindet, insbesondere mit der Förderebene übereinstimmt. Das Steuerelement 200 wird also durch das schwere Stückgut in eine zweite Stellung bewegt, welche sich unterhalb der dritten Stellung befindet. Dies führt dazu, dass z.B. aufgrund der Hebelwirkung sowohl die Bremsrolle 202' als auch die Bremsrolle 202" gegen die Kontaktfläche des Stückguts 110‴ drücken können und ihre Bremswirkung entfalten können.

Z.B. befindet sich in einer nicht zwingenden Variante z.B. die Oberseite des Steuerelements 200 oberhalb der Förderebene. Dies kann besonders vorteilhaft ermöglichen, dass aufgrund der elastischen Eigenschaften des Stückgutes 110"'das Stückgut auch hier im Bereich der Bremsrollen 202' und 202" durchhängen, sodass aufgrund der Summe des Durchhangs sowie der Hebelwirkung sowohl die Bremsrolle 202' als auch die Bremsrolle 202" gegen das Stückgut 110‴ drücken können und ihre Bremswirkung entfalten können. Der Durchhang kann jedoch auch gegeben sein, wenn sich in der zweiten Stellung die Oberseite des Steuerelements 200 auf Höhe der Förderebene befindet.

Allgemein wird durch dieses Drücken des Stückguts 110‴ auf das Steuerelement 200 und dessen Bewegung in die zweite Stellung der Hebel 206 um die Achse 1000 verschwenkt, wodurch der Abstand zwischen der Oberseite der Bremsrollen 202' und 202" und der die Unterseite des Stückguts bildende Kontaktfläche jeweils so weit reduziert wird, dass beide Bremsrollen mit der Kontaktfläche des Stückguts in Kontakt geraten und ihre Bremswirkung entfalten können.

### Bezugszeichenliste

- 100: Rollenbahn
- 102: Förderrolle
- 104: zweites Steuerelement
- 106: Endanschlag
- 108: Förderrichtung
- 110: Stückgut
- 200: erstes Steuerelement
- 202: Bremsrolle
- 204: Drehpunkt
- 206: Hebel
- 500: Blockierelement
- 900: Drehachse
- 902: Bereich
- 1000: Hebelachse

## Patentansprüche

1. Rollenbahn (100) mit Förderrollen (102) zur Beförderung von Stückgütern (110) in einer Förderrichtung (108) von einer Aufgabeseite zu einer Entnahmeseite, wobei durch die Förderrollen (102) eine Förderebene gebildet wird, wobei die Rollenbahn (100) eine Bremsvorrichtung aufweist, wobei die Bremsvorrichtung umfasst:
- Ein erstes Steuerelement (200), das durch eines der sich in der Förderrichtung (108) stromabwärts entlang eines Förderwegs auf die Entnahmeseite zubewegenden Stückgüter (110) aus einer ersten Stellung, in welches es sich über die Förderebene hinaus erstreckt, in eine zweite Stellung bewegbar ist, in der es sich in oder unterhalb der Förderebene befindet,
- Eine zwischen einer ersten und einer zweiten Stellung bewegbare erste Bremsrolle (202), wobei sich die erste Bremsrolle (202) in der ersten Stellung unterhalb der Förderebene befindet, wobei die erste Bremsrolle (202) bezüglich des ersten Steuerelements (200) entgegen der Förderrichtung (108) stromaufwärts angeordnet ist, wobei die erste Bremsrolle (202) dazu ausgebildet ist in der zweiten Stellung so mit dem darüber gleitenden Stückgut (110) in Kontakt zu treten, dass die erste Bremsrolle (202) das Stückgut (110) von unten abbremst,
- Einen das erste Steuerelement (200) mit der erste Bremsrolle (202) koppelnden Hebel (206), wobei der Hebel (206) um einen Drehpunkt (204) schwenkbar ist und zwei Hebelenden aufweist, und wobei sich aufgrund des Hebels (206) die erste Bremsrolle (202) in der ersten Stellung befindet, wenn sich das Steuerelement in der ersten Stellung befindet und sich die erste Bremsrolle (202) in der zweiten Stellung befindet, wenn sich das erste Steuerelement (200) in der zweiten Stellung befindet,
**dadurch gekennzeichnet, dass**
das eine Hebelende durch das erste Steuerelement (200) und das andere Hebelende durch die erste Bremsrolle (202) gebildet wird.

2. Rollenbahn (100) nach Anspruch 1, ferner mit einem die Bewegung der Stückgüter (110) blockierenden Endanschlag (106) an der Entnahmeseite, wobei die Stückgüter (110) in der Förderrichtung (108) eine Ausdehnung mit einer Mindestlänge aufweisen.

3. Rollenbahn (100) nach Anspruch 2, wobei
- der Abstand zwischen dem Endanschlag (106) und dem erste Steuerelement (200) kleiner oder gleich der Mindestlänge ist und/oder
- der Abstand zwischen dem Endanschlag (106) und der ersten Bremsrolle (202) kleiner oder gleich der doppelten Mindestlänge ist und größer als die Mindestlänge ist, vorzugsweise größer als die 1,2-fache Mindestlänge ist.

4. Rollenbahn (100) nach einem der vorigen Ansprüche, ferner mit einer Nachlaufsperre mit einem zweiten Steuerelement (104) und einem mit dem zweiten Steuerelement (104) gekoppelten Blockierelement (500), wobei aufgrund der Kopplung bei Betätigung des zweiten Steuerelements (104) durch eines der sich in der Förderrichtung (108) bewegenden Stückgüter (110) das Blockierelement (500) in den Förderweg gedrängt wird, wobei
- das Blockierelement (500) bezüglich der ersten Bremsrolle (202) stromaufwärts angeordnet ist,
- die erste Bremsrolle (202) in der Förderrichtung (108) zwischen dem Blockierelement (500) und einer Freigabeposition angeordnet ist, an welcher die Betätigung des zweiten Steuerelements (104) durch das sich in der Förderrichtung (108) bewegenden Stückgut aufgehoben wird.

5. Rollenbahn (100) nach Anspruch 4, wobei
- aufgrund der Betätigung das zweite Steuerelement (104) aus einer ersten Stellung in eine zweite Stellung bewegbar ist,
- das Blockierelement (500) dazu ausgebildet ist, aufgrund der Bewegung des zweiten Steuerelements (104) von der ersten in die zweite Stellung von einer ersten Stellung in Richtung einer zweiten Stellung gedrängt zu werden, wobei in der ersten Stellung der Förderweg freigegeben ist und in der zweiten Stellung der Förderweg blockiert ist.

6. Rollenbahn (100) nach Anspruch 5, wobei das zweite Steuerelement (104) dazu ausgebildet ist, sich automatisch nach einem Außer-Kontakttreten des sich in der Förderrichtung (108) auf die Entnahmeseite zubewegenden Stückguts (110) in die erste Stellung zu bewegen und dadurch das Blockierelement (500) in die erste Stellung zu drängen, wobei an der Freigabeposition ein Außer-Kontakttreten des sich in der Förderrichtung (108) bewegenden Stückguts (110) erfolgt.

7. Rollenbahn (100) nach einem der Ansprüche 4-6, wobei der Abstand zwischen dem Endanschlag (106) und der Freigabeposition so gewählt ist, dass das zweite Steuerelement (104) durch ein sich am Endanschlag (106) befindliches Stückgut in der zweiten Stellung gehalten wird, wenn eine Ausdehnung dieses Stückguts (110) in der Förderrichtung (108) mindestens mehr als die Mindestlänge, insbesondere mindestens das 1,2-fache der Mindestlänge beträgt.

8. Rollenbahn (100) nach einem der Ansprüche 5-7, wobei es sich bei dem zweiten Steuerelement (104)
- um eine Steuerfahne handelt, welche aufgrund der Betätigung um eine senkrecht zur Förderebene stehende Achse zwischen der ersten Stellung und der zweiten Stellung schwenkbar, insbesondere rotierbar ist und in der ersten Stellung seitlich in den Förderweg der Stückgüter (110) hineinragt, oder
- um einen Steuerhebel handelt, wobei sich der Steuerhebel in der ersten Stellung über die Förderebene hinaus erstreckt und sich in der zweiten Stellung in oder unterhalb der Förderebene befindet.

9. Rollenbahn (100) nach einem der vorigen Ansprüche, wobei sich eine Schwenkachse des Hebels (206) parallel zur Förderebene und senkrecht zur Förderrichtung (108) erstreckt.

10. Rollenbahn (100) nach einem der vorigen Ansprüche, wobei das erste Steuerelement (200) ausgebildet ist, in einem durch das Stückgut (110) unbelasteten Zustand automatisch in die erste Stellung bewegt zu werden.

11. Rollenbahn (100) nach Anspruch 10, wobei
- der Abstand der Hebelenden vom Drehpunkt (204) so gewählt ist, dass das Bewegen des ersten Steuerelements in die erste Stellung schwerkraftbedingt erfolgt und/oder
- ferner ein elastisches Element vorgesehen ist und das Bewegen des ersten Steuerelements (200) in die erste Stellung bedingt durch das elastische Element erfolgt.

12. Rollenbahn (100) nach einem der vorigen Ansprüche, wobei durch die Rollenbahn (100) eine Schwerkraftrollenbahn (100) gebildet wird.

13. Rollenbahn nach einem der vorigen Ansprüche, ferner mit einer zweiten, durch den Hebel (206), zwischen einer ersten und einer zweiten Stellung bewegbaren Bremsrolle, wobei die zweite Bremsrolle zwischen dem ersten Steuerelement (200) und der erste Bremsrolle (202) angeordnet ist und der Hebel (206) ferner das erste Steuerelement (200) mit der zweiten Bremsrolle koppelt.

14. Rollenbahn nach Anspruch 13, wobei die zweite Bremsrolle (202) dazu ausgebildet ist in ihrer zweiten Stellung so mit dem darüber gleitenden Stückgut (110) in Kontakt zu treten, dass die zweite Bremsrolle (202) das Stückgut (110) von unten abbremst, und in ihrer ersten Stellung außer Kontakt mit dem Stückgut (110) zu stehen.

15. Rollenbahn nach Anspruch 14, wobei das Steuerelement in Abhängigkeit von der durch das Stückgut auf das Steuerelement wirkenden Gewichtskraft in die zweite Stellung oder eine zwischen der ersten Stellung und der zweiten Stellung befindlichen dritten Stellung bewegbar ist, wobei der Hebel (206) ausgebildet ist, dass in der dritten Stellung des Steuerelements die erste Bremsrolle (202) außer Kontakt mit dem Stückgut (110) steht und sich die zweite Bremsrolle in der zweiten Stellung befindet.

16. Rollenbahn (100) nach einem der vorigen Ansprüche, wobei es sich bei dem ersten Steuerelement (200) um eine Förderrolle oder eine Bremsrolle handelt.

## Claims

1. A roller conveyor (100) with conveyor rollers (102) for conveying items (110) in a conveying direction (108) from a feed side to a removal side, wherein a conveying plane is formed by the conveyor rollers (102), wherein the roller conveyor (100) has a braking device, wherein the braking device comprises:
- a first control element (200) which is movable by one of the items (110) moving downstream in the conveying direction (108) along a conveying path towards the removal side from a first position, in which it extends beyond the conveying plane, into a second position, in which it is located in or below the conveying plane,
- a first brake roller (202) movable between a first and a second position, wherein in the first position the first brake roller (202) is located below the conveying plane, wherein the first brake roller (202) is arranged upstream counter to the conveying direction (108) with respect to the first control element (200), wherein the first brake roller (202) is configured in the second position to come into contact with the item (110) sliding over it in such a way that the first brake roller (202) brakes the item (110) from below,
- a lever (206) coupling the first control element (200) to the first brake roller (202), wherein the lever (206) is pivotable about a pivot point (204) and has two lever ends, and wherein on account of the lever (206) the first brake roller (202) is in the first position when the control element is in the first position and the first brake roller (202) is in the second position when the first control element (200) is in the second position,
**characterised in that**
one lever end is formed by the first control element (200) and the other lever end is formed by the first brake roller (202).

2. The roller conveyor (100) according to claim 1, further comprising an end stop (106) blocking the movement of the items (110) on the removal side, wherein the items (110) have an extent with a minimum length in the conveying direction (108).

3. The roller conveyor (100) according to claim 2, wherein
- the distance between the end stop (106) and the first control element (200) is less than or equal to the minimum length and/or
- the distance between the end stop (106) and the first brake roller (202) is less than or equal to twice the minimum length and is greater than the minimum length, preferably greater than 1.2 times the minimum length.

4. The roller conveyor (100) according to any one of the preceding claims, further comprising an overtravel stop comprising a second control element (104) and a blocking element (500) coupled to the second control element (104), wherein, due to the coupling, when the second control element (104) is actuated by one of the items (110) moving in the conveying direction (108), the blocking element (500) is urged into the conveying path, wherein
- the blocking element (500) is arranged upstream with respect to the first brake roller (202),
- the first brake roller (202) is arranged in the conveying direction (108) between the blocking element (500) and a release position, at which the actuation of the second control element (104) by the item moving in the conveying direction (108) is cancelled.

5. The roller conveyor (100) according to claim 4, wherein
- the second control element (104) is movable from a first position into a second position as a result of the actuation,
- the blocking element (500) is configured to be urged from a first position towards a second position due to the movement of the second control element (104) from the first into the second position, wherein in the first position the conveying path is unblocked and in the second position the conveying path is blocked.

6. The roller conveyor (100) according to claim 5, wherein the second control element (104) is configured to automatically move into the first position after the item (110) moving in the conveying direction (108) towards the removal side has come out of contact, thereby urging the blocking element (500) into the first position, wherein the item (110) moving in the conveying direction (108) comes out of contact in the release position.

7. The roller conveyor (100) according to any one of claims 4-6, wherein the distance between the end stop (106) and the release position is selected such that the second control element (104) is held in the second position by an item located at the end stop (106) if an extent of this item (110) in the conveying direction (108) is at least more than the minimum length, in particular at least 1.2 times the minimum length.

8. The roller conveyor (100) according to any one of claims 5-7, wherein said second control element (104)
- is a control vane which, due to the actuation, is pivotable about an axis perpendicular to the conveying plane between the first position and the second position, in particular is rotatable, and in the first position projects laterally into the conveying path of the items (110), or
- is a control lever, wherein the control lever extends beyond the conveying plane in the first position and is located in or below the conveying plane in the second position.

9. The roller conveyor (100) according to any one of the preceding claims, wherein a pivot axis of the lever (206) extends parallel to the conveying plane and perpendicular to the conveying direction (108).

10. The roller conveyor (100) according to any one of the preceding claims, wherein the first control element (200) is configured, in a state unloaded by the items (110), to be moved automatically into the first position.

11. The roller conveyor (100) according to claim 10, wherein
- the distance of the lever ends from the pivot point (204) is chosen such that the movement of the first control element into the first position is due to gravity and/or
- an elastic element is further provided and the first control element (200) is moved into the first position by the elastic element.

12. The roller conveyor (100) according to any one of the preceding claims, wherein the roller conveyor (100) forms a gravity roller conveyor (100).

13. The roller conveyor according to any one of the preceding claims, further comprising a second brake roller movable by the lever (206) between a first position and a second position, wherein the second brake roller is arranged between the first control element (200) and the first brake roller (202), and the lever (206) further couples the first control element (200) to the second brake roller.

14. The roller conveyor according to claim 13, wherein the second brake roller (202) is configured in its second position to come into contact with the item (110) sliding over it in such a way that the second brake roller (202) brakes the item (110) from below, and in its first position to be out of contact with the item (110).

15. The roller conveyor according to claim 14, wherein the control element is movable into the second position or into a third position, located between the first position and the second position, in dependence on the weight force acting on the control element by the item, wherein the lever (206) is configured such that, in the third position of the control element, the first brake roller (202) is out of contact with the item (110) and the second brake roller is located in the second position.

16. The roller conveyor (100) according to any one of the preceding claims, wherein the first control element (200) is a conveyor roller or a brake roller.

## Revendications

1. Bande à rouleaux (100) pourvue de rouleaux de transport (102) pour le transport de marchandises de détail (110) dans une direction de transport (108) à partir d'un côté d'alimentation vers un côté de prélèvement, où un plan de transport est formé par les rouleaux de transport (102), où la bande à rouleaux (100) présente un dispositif de freinage, le dispositif de freinage comprenant :
- un premier élément de commande (200) qui peut être déplacé par une des marchandises au détail (110) se déplaçant sur le côté de prélèvement en aval dans la direction de transport (108) le long d'un trajet de déplacement à partir d'une première position, dans laquelle il s'étend vers l'extérieur au-dessus du plan de transport, vers une deuxième position, dans laquelle il se trouve dans le plan de transport ou en-dessous,
- un premier rouleau de freinage (202) mobile entre une première et une deuxième position, où le premier rouleau de freinage (202) se trouve en-dessous du plan de transport dans la première position, où le premier rouleau de freinage (202) est disposé en amont par rapport au premier élément de commande (200) en sens inverse de la direction de transport (108), où le premier rouleau de freinage (202) est conçu pour entrer en contact avec la marchandise de détail (110) se déplaçant au-dessus dans la deuxième position de sorte que le premier rouleau de freinage (202) freine la marchandise de détail (110) par le dessous,
- un levier (206) accouplant le premier élément de commande (200) et le premier rouleau de freinage (202), où le levier (206) est pivotable autour d'un point de rotation (204) et présente deux extrémités de levier, et où, du fait du levier (206), le premier rouleau de freinage (202) se trouve dans la première position lorsque l'élément de commande se trouve dans la première position et le premier rouleau de freinage (202) se trouve dans la deuxième position lorsque le premier élément de commande (200) se trouve dans la deuxième position,
**caractérisée en ce**
**qu'**une extrémité de levier est formée par le premier élément de commande (200) et l'autre extrémité de levier est formée par le premier rouleau de freinage (202).

2. Bande à rouleaux (100) selon la revendication 1, pourvue en outre d'une butée d'extrémité (106) sur le côté de prélèvement, bloquant le déplacement des marchandises de détail (110), où les marchandises de détail (110) présentent une extension avec une longueur minimale dans la direction de transport (108).

3. Bande à rouleaux (100) selon la revendication 2, dans laquelle
- la distance entre la butée d'extrémité (106) et le premier élément de commande (200) est inférieure ou égale à la longueur minimale, et/ou
- la distance entre la butée d'extrémité (106) et le premier rouleau de freinage (202) est inférieure ou égale au double de la longueur minimale, et est supérieure à la longueur minimale, est de préférence supérieure à 1,2 fois la longueur minimale.

4. Bande à rouleaux (100) selon l'une des revendications précédentes, pourvue en outre d'un blocage de la marche par inertie avec un deuxième élément de commande (104) et un élément de blocage (500) couplé avec le deuxième élément de commande (104), où, en raison de l'accouplement lors de l'actionnement du deuxième élément de commande (104) par l'une des marchandises de détail (110) se déplaçant dans la direction de transport (108), l'élément de blocage (500) est poussé sur le trajet de transport, où
- l'élément de blocage (500) est disposé en amont par rapport au premier rouleau de freinage (202),
- le premier rouleau de freinage (202) dans la direction de transport (108) est disposé entre l'élément de blocage (500) et une position de libération à laquelle l'actionnement du deuxième élément de commande (104) est annulé par la marchandise de détail se déplaçant dans la direction de transport (108).

5. Bande à rouleaux (100) selon la revendication 4, où
- en raison de l'actionnement, le deuxième élément de commande (104) peut être déplacé d'une première position vers une deuxième position,
- l'élément de blocage (500) est conçu pour être poussé, en raison du déplacement du deuxième élément de commande (104), de la première position vers la deuxième, d'une première position en direction d'une deuxième position, où, le trajet de transport est libéré dans la première position et le trajet de transport est bloqué dans la deuxième position.

6. Bande à rouleaux (100) selon la revendication 5, dans laquelle le deuxième élément de commande (104) est conçu pour se déplacer automatiquement dans la première position après une mise hors contact de la marchandise de détail (110) se déplaçant dans la direction de transport (108) sur le côté de prélèvement et ainsi pousser l'élément de blocage (500) vers la première position, où, il y a une mise hors contact de la marchandise de détail (110) se déplaçant dans la direction de transport (108) dans la position de libération.

7. Bande à rouleaux (100) selon l'une des revendications 4 à 6, dans laquelle la distance entre la butée d'extrémité (106) et la position de libération est choisie de telle manière que le deuxième élément de commande (104) est maintenu dans la deuxième position par une marchandise de détail se trouvant sur la butée d'extrémité (106) lorsqu'une extension de cette marchandise de détail (110) dans la direction de transport (108) est égale au moins à plus de la longueur minimale, en particulier à au moins 1,2 fois la longueur minimale.

8. Bande à rouleaux (100) selon l'une des revendications 5 à 7, dans laquelle, dans le cas du deuxième élément de commande (104),
- il s'agit d'un drapeau de commande, lequel peut pivoter, notamment se mettre en rotation, en raison de l'actionnement, autour d'un axe perpendiculaire par rapport au plan de transport, entre la première position et la deuxième position, et pénètre latéralement sur le trajet de transport des marchandises de détail (110) dans la première position, ou
- il s'agit d'un levier de commande, où le levier de commande s'étend au dehors par-dessus le plan de transport dans la première position et se trouve dans la deuxième position dans ou en-dessous du plan de transport.

9. Bande à rouleaux (100) selon l'une des revendications précédentes, dans laquelle un axe de pivotement du levier (206) s'étend parallèlement par rapport au plan de transport et perpendiculairement par rapport à la direction de transport (108).

10. Bande à rouleaux (100) selon l'une des revendications précédentes, dans laquelle le premier élément de commande (200) est conçu pour pouvoir être déplacé par la marchandise de détail (110) automatiquement dans un état non contraint dans la première position.

11. Bande à rouleaux (100) selon la revendication 10, dans laquelle
- la distance des extrémités de levier au point de rotation (204) est choisie de telle manière que le déplacement du premier élément de commande dans la première position a lieu du fait de la force de gravité, et/ou
- en outre, un élément élastique est prévu et le déplacement du premier élément de commande (200) dans la première position a lieu du fait de l'élément élastique.

12. Bande à rouleaux (100) selon l'une des revendications précédentes, où une bande à rouleaux par la force de gravité (100) est formée par la bande à rouleaux (100).

13. Bande à rouleaux selon l'une des revendications précédentes, pourvue en outre d'un deuxième rouleau de freinage pouvant être déplacé par le levier (206) entre une première et une deuxième position , où le deuxième rouleau de freinage est disposé entre le premier élément de commande (200) et le premier rouleau de freinage (202) et le levier (206) accouple en outre le premier élément de commande (200) avec le deuxième rouleau de freinage.

14. Bande à rouleaux selon la revendication 13, dans laquelle le deuxième rouleau de freinage (202) est conçu pour se mettre en contact avec la marchandise de détail (110) glissant par-dessus dans la deuxième position, que le deuxième rouleau de freinage (202) freine la marchandise de détail (110) par le dessous et pour qu'ils soient sans contact avec la marchandise de détail (110) dans leur première position.

15. Bande à rouleaux selon la revendication 14, dans laquelle l'élément de commande peut être déplacé en fonction de la force de gravité agissant par la marchandise de détail sur l'élément de commande dans la deuxième position ou une troisième position se trouvant entre la première position et la deuxième position, où le levier (206) est conçu de sorte que, dans la troisième position de l'élément de commande, le premier rouleau de freinage (202) n'est pas en contact avec la marchandise de détail (110) et le deuxième rouleau de freinage se trouve dans la deuxième position.

16. Bande à rouleaux (100) selon l'une des revendications précédentes, dans laquelle, dans le cas du premier élément de commande (200), il s'agit d'un rouleau de transport ou un rouleau de freinage.
